# EUROPÄISCHE PATENTSCHRIFT

(11) **EP 1 554 624 B1**
(45) Veröffentlichungstag und Bekanntmachung des Hinweises auf die Patenterteilung: **03.03.2010**
(21) Anmeldenummer: 03769454.4
(22) Anmeldetag: 24.10.2003
(51) Int. Cl.: G02C 7/02

(54) **BRILLENGLAS MIT GERINGEN ABBILDUNGSFEHLERN HÖHERER ORDNUNG**
SPECTACLES WITH REDUCED HIGHER ORDER IMAGING ERRORS
VERRE DE LUNETTES PRESENTANT UNE REDUCTION DES ABERRATIONS D'ORDRE SUPERIEUR

(30) Priorität: 25.10.2002 DE 10250093
(43) Veröffentlichungstag der Anmeldung: 20.07.2005
(73) Patentinhaber: Rodenstock GmbH, 80469 München (DE)
(72) Erfinder: WEHNER, Edda, 82275 Emmering (DE); WELK, Andrea, 81547 München (DE); HAIMERL, Walter, 80337 München (DE); ALTHEIMER, Helmut, 87650 Baisweil-Lauchdorf (DE); ESSER, Gregor, 81735 München (DE)
(74) Vertreter: Müller-Boré & Partner Patentanwälte
(86) Internationale Anmeldenummer: PCT/EP2003/011859
(87) Internationale Veröffentlichungsnummer: WO 2004/038488

(56) Entgegenhaltungen:
- EP-A- 0 969 309
- US-B1- 6 231 182

## Beschreibung

Die Erfindung bezieht sich auf ein Verfahren zur Herstellung eines Brillenglases mit geringen Abbildungsfehlern höherer Ordnung.

Bei Einstärkengläsern werden schon seit längerem asphärische oder atorische Flächen verwendet. Dabei besteht das Ziel darin, entweder die kosmetischen Eigenschaften oder die optischen Eigenschaften zu verbessern. Unter kosmetisehen Eigenschaften versteht man Dicke, Gewicht und Durchbiegung und unter den optischen Eigenschaften versteht man den Astigmatismus und den Brechwert. Im Allgemeinen sollen bei Einstärkengläsern mit asphärischen oder atorischen Flächen die kosmetischen Eigenschaften verbesset werden, ohne dass die optischen Eigenschaften verschlechtert werden. Bisher wurden Abbildungsfehler höherer Ordnung nicht berücksichtigt. Jedoch treten bei Einstärkengläsern mit asphärischen oder atorischen Flächen oftmals Verträglichkeitsprobleme auf. Diese konnten nicht nachvollzogen werden, da die Abbildungsfehler zweiter Ordnung (Astigmatismus und Brechwert) sehr gut korrigiert waren. Die Ursache für diese Probleme lag bei den Abbildungsfehlern höherer Ordnung, welche beim Stand der Technik nicht berücksichtigt wurden und welche deutlich höherrer Werte annehmen als bei Einstärkengläsern mit spährischen oder torischen Flächen (meniskenförmige Linsen).

Dokument US 6,231,182 offenbart ein monofokales Brillenglas, mit einer asphärischen vorder- und rückseitigen Fläche. Mindestens eine der Flächen hat gleiche Hauptkrümmungsradien am Scheitel. Durch Bedingungen an den Verlauf der mittleren Brechkraft entlang eines konstanten Azimutwinkels wird erreicht, daß das Brillenglas in einem Bereich innerhalb eines Radius von ungefähr 20 mm um den Scheitel einen Astigmatismus und Refraktionsfehler von weniger als 0,1 dpt aufweist.

Dokument EP 0969 309 offenbart eine Serie progressiver Brillengläser, deren Versatz der Projektion der Hauptlinie in die x, y- Ebene einem parametrisierten Zusammenhang folgt. Die augenseitige Fläche kann bei sphärischer Verordnung eine asphärische Fläche sein, bei torischer Verordnung eine atorische Fläche, wobei die Basiskurve der progressiven Fläche 1 dpt bis 1,5 dpt "flacher' als bei sphärischer bzw. torischer augenseitiger Fläche - gewählt ist. Die dadurch entstehenden Bildfehler in Gebrauchsstellung werden durch die asphärische, bzw. atorische Fläche korrigiert.

Bei Progressivgläsern spielen die Abbildungsfehler höherer Ordnung eine ganz wesentliche Rolle, da dort auf Grund der Progression solche Fehler induziert werden. Dennoch wurden im Stand der Technik diese Fehler bisher nicht berücksichtigt.

Somit ist festzustellen, daß bei Brillengläser aus dem Stand der Technik bisher keine Abbildungsfehler höherer Ordnung, in erster Linie sphärische Aberration und Koma berücksichtigt wurden.

Es ist Aufgabe der Erfindung, ein Verfahren zur Herstellung eines progressiven Brillenglases zur Verfügung zu stellen; sodaß das progressive Brillenglas unter Berücksichtigung der Verträglichkeit für dein Brillenträger bestmöglich optimiert ist.

Diese Aufgabe wird gelöst durch ein Verfahren zur Herstellung eines progressiven Brillenglases entsprechend den unabhängigen Ansprüchen. Bevorzugte Ausführungsformen ergeben sich aus den Unteransprüchen.

Es wird ein progressives Brillenglas bereitgestellt, welcher dadurch gekennzeichnet ist, daß es geringe Abbildungsfehler höherer Ordnung aufweist. Unter Abbildungsfehlern höherer Ordnung versteht man hierbei eine sphärische Aberration und/oder eine Koma. Bei Einstärkenbrillengläsern die ein Vergleichsbeispeil sind und nicht Gegenstand der Erfindung wird weiter davon ausgegangen, daß die Abbildungsfehler höherer Ordnung denen eines Einstärkenbrillenglases mit sphärischen bzw. torische Flächen entsprechen. Ferner ist sowohl der Astigmatismus und der Brechwert als auch die Koma und die sphärische Aberration vergleichbar mit denen einer meniskenförmigen Linse. Bei den progressiven Brillengläsern (Gegenstand der Erfindung) befindet sich der Maximalwert der Koma in einem Rechteck, das vom Zentrierpunkt, dem Prismenbezugspunkt und dem Nahbezugspunkt aufgespannt wird. Ferner ist der Quotient aus Koma und Addition begrenzt. Die Koma nimmt insbesondere in den Bezugspunkten mit der Zunahme des Pupillendurchmessers nur geringfügig zu. Weiter weist die Koma in den Bezugspunkte als Funktion des Pupillendurchmessers eine geringere Steigung als in den Punkten mit maximaler Koma auf. Sowohl der Maximalwert als auch der Minimalwert der sphärischer Aberration befinden sich in einem Rechteck, das vom Zentrierpunkt, dem Prismenbezugspunkt und dem Nahbezugspunkt aufgespannt wird. Des weiteren nimmt die sphärische Aberration, insbesondere in den Bezugspunkten, mit der Zunahme des Pupillendurchmessers nur geringfügig zu. Weiter weist die sphärische Aberration in den Bezugspunkten als Funktion des Pupillendurchmessers eine geringere Steigung auf als in den Punkten mit Maximal- und Minimalwerten.

Bei sphärischen Einstärkengläsern wird beispielsweise die Durchbiegung so gewählt, daß die Abbildungsfehler zweiter Ordnung, der Astigmatismus schiefer Bündel und Refraktionsfehler bestmöglich korrigiert werden. Aus diesem Grund werden Einstärkengläser mit sphärischen Flächen als meniskenförmige Linsen ausgeführt. Dabei wird die Durchbiegung so gewählt, daß der Astigmatismus schiefer Bündel und der Refraktioinsfehler möglichst gering sind. Um jedoch den Öffnungsfehler (sphärische Aberration) zu korrigieren, sollte man keine meniskenförmigen Linsen, sondern Bi-Linsen (Radianverhältnis ca. 1:6) verwenden. In der Regel treten aber bei meniskenförmigen Linsen keine Verträglichkeitsprobleme auf. Die Ursache liegt anscheinend darin, daß die Aperturblende des Auges relativ klein ist und daß zusätzlich durch den Stiles-Crawford Effekt eine kleinere sensorische Blende der körperlichen Blende überlagert ist. Aus diesem Grund kann davon ausgegangen werden, daß Koma und sphärische Aberration in der Größenordnung wie sie bei meniskenförmigen Linsen auftreten, keine Verträglichkeitsnrobleme hervorrufen.

Die Abbildungsfehler höherer Ordnung kann man beispielsweise mit der folgenden Methode berechnen:
1. Es wird eine Blickrichtung, ein Objektpunkt, ein Punkt auf der Vorderfläche oder ein Punkt auf der Rückfläche des Brillenglases vorgegeben. Durch eine dieser vier Vorgaben ist zusammen mit dem Augendrehpunkt der Strahlengang eindeutig definiert und mittels Strahldurchrechnung kann man den Hauptstrahl berechnen.
2. Die Lage der Aperturblende wird berechnet, indem man die Eintrittspunille des Auges je nach Blickrichtung um den Augendrehpunkt rotieren läßt. Die Mitte der Aperturblende liegt dann auf dem Hauptstrahl. Somit ergibt sich für jede Blickrichtung eine neue Lage der Aperturblende.
3. Der Öffnungsstrahlengang wird berechnet, indem von einem gegebenen, auf dem Hauptstrahl liegenden Objektpunkt Strahlen mit unterschiedlichen Öffnungswinkeln berechnet werden.
4. Aus diesen Strahlen und den optischen weglängen wird dann die Wellenfront in der Eintrittspupille berechnet.
5. Diese Wellenfront stellt man dann mittels "Zernikefunktionen" dar.
6. Aus dem Koeffizienten der Zernikefunktion kann man nun die Abbildungsfehler berechnen. So erhält man für jede Blickrichtung unter anderem Astigmatismus, Brechwert, Koma und sphärische Aberration.

Die Erfindung wird nachstehend ohne Beschränkung des allgemeinen Erfindungsgedankens anhand von Ausführungsbeispielen unter Bezugnahme auf die Zeichnungen exemplarisch beschrieben, auf die im Übrigen hinsichtlich der Offenbarung aller im Text nicht näher erläuterten erfindungsgemäßen Einzelheiten ausdrücklich verwiesen wird. Es zeigen:
Fig. 1 die Veränderung des Brechwertes als Funktion des Abstandes r vom Scheitel (nicht Teil der Erfindung);
Fig. 2 den Astigmatismus als Funktion des Abstandes r vom Scheitel (nicht Teil der Erfindung);
Fig. 3 die sphärische Aberration als Funktion des Abstandes r vom Scheitel (nicht Teil der Erfindung);
Fig. 4 die Koma als Funktion des Abstandes r vom Scheitel (nicht Teil der Erfindung);

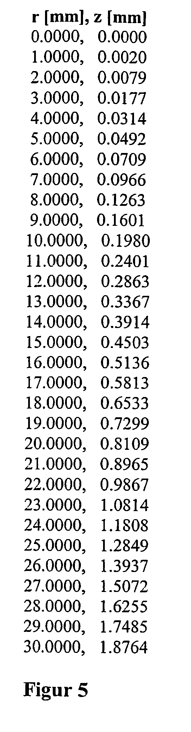

Fig. 5 als Tabelle die Pfeilhöhe einer sphärischen Fläche als Funktion des Abstandes r vom Scheitel (nicht Teil der Erfindung);
Fig. 6 bis Fig. 8 den Brechwert, den Astigmatismus und die Pfeilhöhen eines Progressivglases nach der Erfindung;
Fig. 9 die Koma;
Fig. 10 die sphärische Aberration;
Fig. 11 die Veränderung der sphärischen Aberration als Funktion des Pupillendurchmessers;
Fig. 12 die Veränderungen der Koma als Funktion des Pupillendurcrchmessers;
Fig. 13 und 14 den Brechwert und den Astigmatismus eines Progressivglases nach dem Stand der Technik;
Fig. 15 und 16 die Koma und die sphärische Aberration dieses Progressivglases;
Fig. 17 bis 20 ein weiteres Ausführungsbeispiel nach der Erfindung.

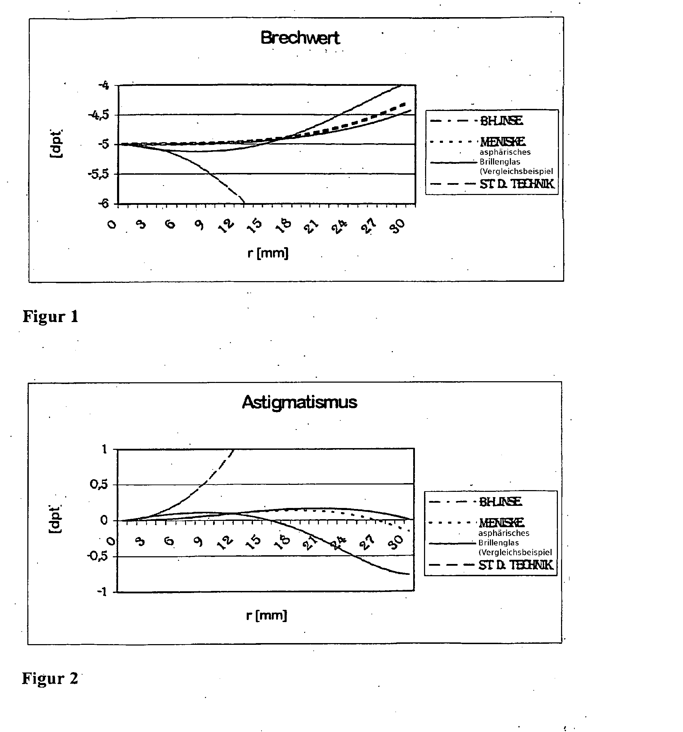

In Fig. 1 stellt die nach unten verlaufende strich-punktierte Linie den Verlauf bei einer Bi-Linse dar. Die darüber verlaufende punktierte Linie stellt den Verlauf bei einer meniskenförmigen Linse dar. Die durchgezogene Linie stellt den Verlauf bei einem asphärischen Glas nach dem Vergleichsbeispiel dar. Und schließlich stellt die vierte gestrichelte Linie den Verlauf bei einem asphärischen Glas nach dem Stand der Technik dar. Man erkennt, daß die meniskenförmige Linse und die beiden asphärischen Gläser sehr gute Eigenschaften aufweisen und mindestens bis ca. 20 mm geringe Abweichungen vom verordneten Wert zeigen. Dagegen weist die Bi-Linse sehr schlechte Eigenschaften auf.

In Fig. 2 stellt die Strich-punktierte Linie den Verlauf bei einer Bi-Linse dar. Die punktierte Linie stellt den Verlauf bei einer meniskenförmigen Linse dar. Die durchgezogene Linie stellt den Verlauf bei einem sphärischen Glas nach dem Vergleichsbeispiel dar und die gestrichelte Linie stellt den Verlauf bei einem asphärischen Glas nach dem Stand der Technik dar. Es ist zu erkennen, daß die meniskenförmige Linse und das asphärische Glas nach dem Vergleichsbeispiel sehr gute Eigenschaften aufweisen. Der Stand der Technik weist geringfügig schlechtere Eigenschaften auf. Die Bi-Linse hingegen weist sehr schlechte Eigenschaften auf.

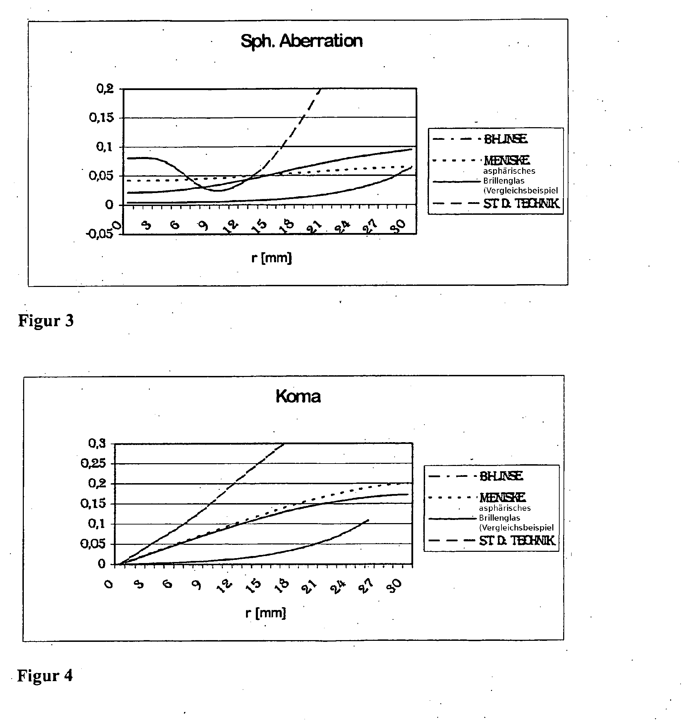

In Fig. 3 stellt die strich-punktierte Linie den Verlauf bei einer Bi-Linse dar. Die punktierte Linie stellt den Verlauf bei einer meniskenförmigen Linse dar, die durchgezogene Linie stellt, den Verlauf bei einem asphärischen Glas nach dem Vergleichsbeispiel dar und die gestrichelte Linie stellt den Verlauf bei einem asphärischen Glas nach dem Stand der Technik dar. Bei den Abbildungseigenschaften höherer Ordnung zeigt, sich nun ein ganz anderes Bild. Die Bi-Linse weist erwartungsgemäß eine sehr geringe sphärische Aberration auf. Hingegen weist der Stand der Technik eine sehr hohe sphärische Aberration auf. Das asphärische Brillenglas nach dem Vergleichsbeispiel weist eine geringe Aberration in der Größenordnung der meniskenförmigen Linse auf.

In Fig. 4 stellt die strich-punktierte Linie den Verlauf bei einer Bi-Line dar. Die punktierte Linse stellt den Verlauf bei einer meniskenförmigen Linse dar. Die durchgezogenen Linie stellt den Verlauf bei einem asphärischen Glas nach dem Vergleichsbeispiel dar und die gestrichelte Linie stellt den Verlauf bei einem sphärischen Glas nach dem Stand der Technik dar. Wie zu erkennen ist, weist auch hier die Bi-Linse eine sehr geringe Aberration auf. Hingegen weist der Stand der Technik eine-sehr hohe Aberration auf. Das asphärische Brillenglas nach dem Vergleichsbeispiel weist eine geringe Aberration in der Größenordnung der meniskenförmigen Linse auf.

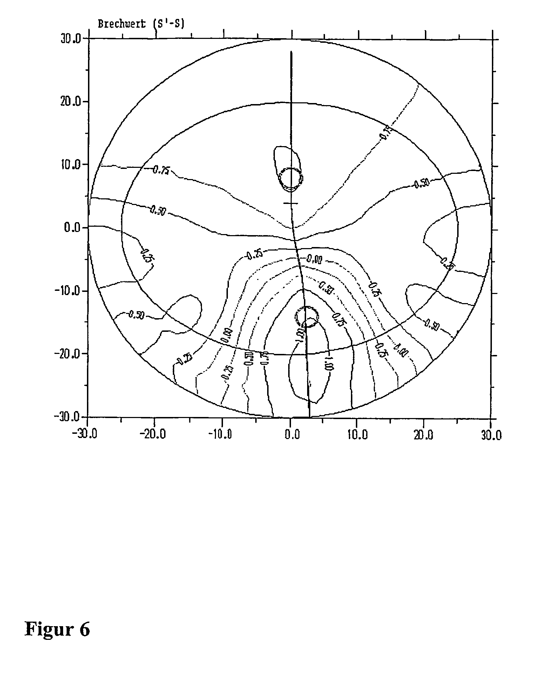

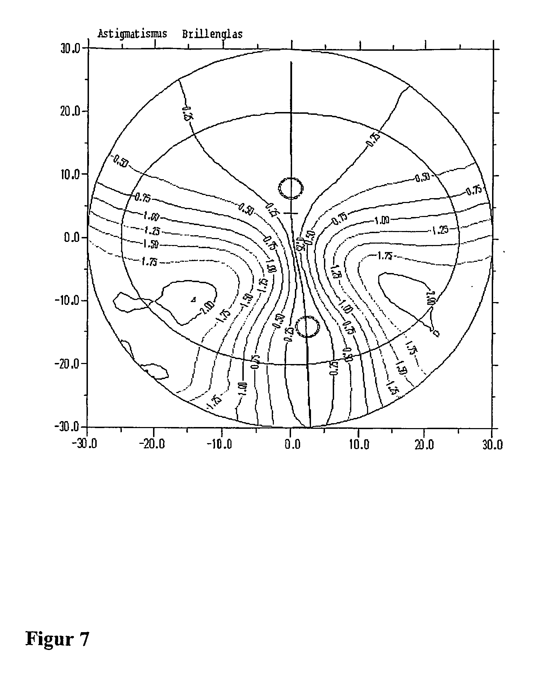

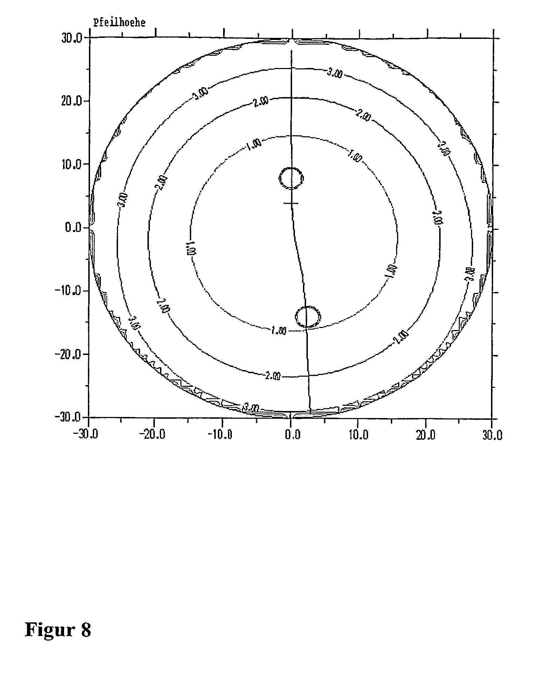

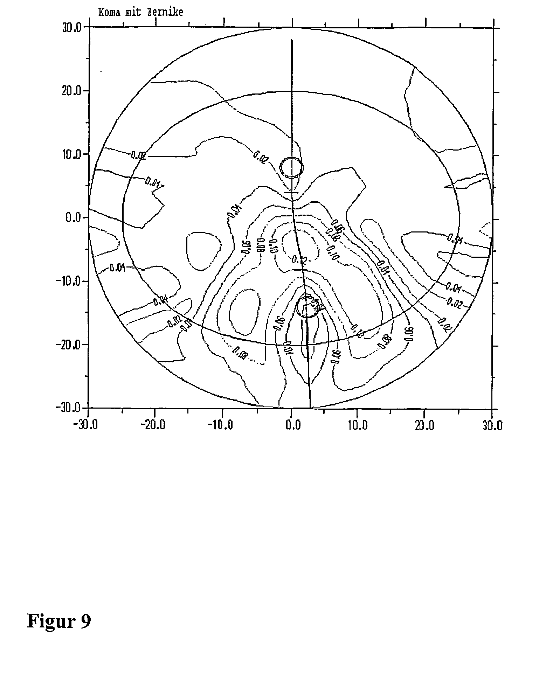

Bei den Figuren 6 bis 8 hat das Brillenglas die Werte sph -1,0 Add 2,0 n = 1,596. In Fig. 9 ist die Koma für jede Blickrichtung in kartesischen Koordinaten dargestellt. Bei einem Brillenglas nach der Erfindung befindet sich der Maximalwert in einem Rechteck, das vertikal vom Zentrierpunkt (oben) und den Nahbezugspunkt (unten) und horizontal von der vertikalen Geraden, die durch den Zentrierpunkt und Fernbezugspunkt geht und auf der anderen Seite durch die vertikal Gerade begrenzt wird, die durch den Nahbezugspunkt geht. Da bei einem Progressivglas durch die Progression Koma induziert wird, lag das Ziel darin, ein Progressivglas zu konstruieren, bei dem der maximale Wert derjenige ist, der durch die Brechwertzunahme selbst induziert wird, ansonsten sollte der Wert überall kleiner sein. Somit soll also nur die Koma zugelassen werden, die aufgrund der progressiven Wirkung notwendig ist, sonst soll sie überall reduziert werden.

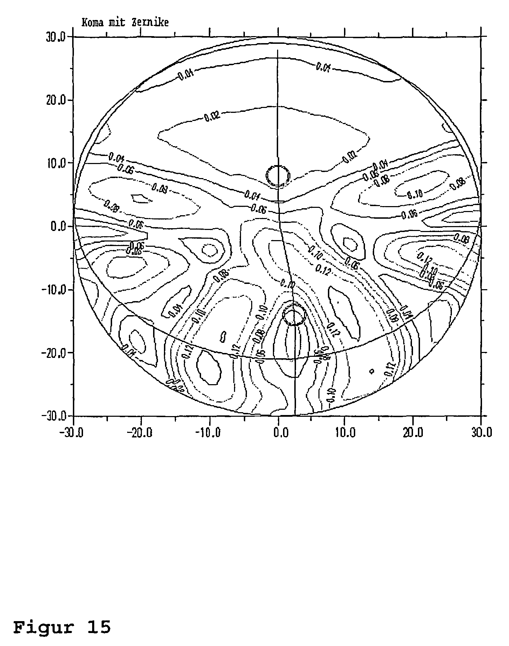

Wie aus Figur 15 zu erkennen ist, ist genau dies beim Stand der Technik nicht der Fall; dort sind die Maximalwerte außerhalb der Progressionszone und auch viel höher als bei der Erfindung. Es wird bei ca. x = 10 und y = -10 ein Maximalwert von 0,16 erreicht, während der größte Wert im Progressionskanal nur 0,13 beträgt und dort dem eines Glases nach der Erfindung entspricht. Auch sind in den äußeren Bereichen nasal und temporal sowie in der Nähe die Werte deutlich höher als bei der Erfindung. Ziel der Erfindung ist es daher, Progressvigläser zu berechnen, bei denen die Koma deutlich reduziert ist. Insbesondere ist es von Vorteil, wenn, wie bereits erwähnt, der Maximalwert der Koma in der Progressionszone, genauer in einem Rechteck befindet, das vom Zentrierpunkt, dem Prismenbezugspunkt und dem Nahbezugspunkt aufgespannt wird.

Da die Koma bei der Erfindung durch die Progression (Addition) erzeuge wird, ist es sinnvoll, daß der Quotient aus Koma und Addition begrenzt ist.

| Addition | 1. | 2 | 3 |
|---|---|---|---|
| Maximale Koma | 0,08 | 0,14 | 0,18 |

Die Koma nimmt mit der Zunahme des Pupillendurchmessers zu. Jedoch ist es bevorzugt, wenn diens begrenzt ist, insbesondere bei Frogressivgläsern mit kurzer Progression.

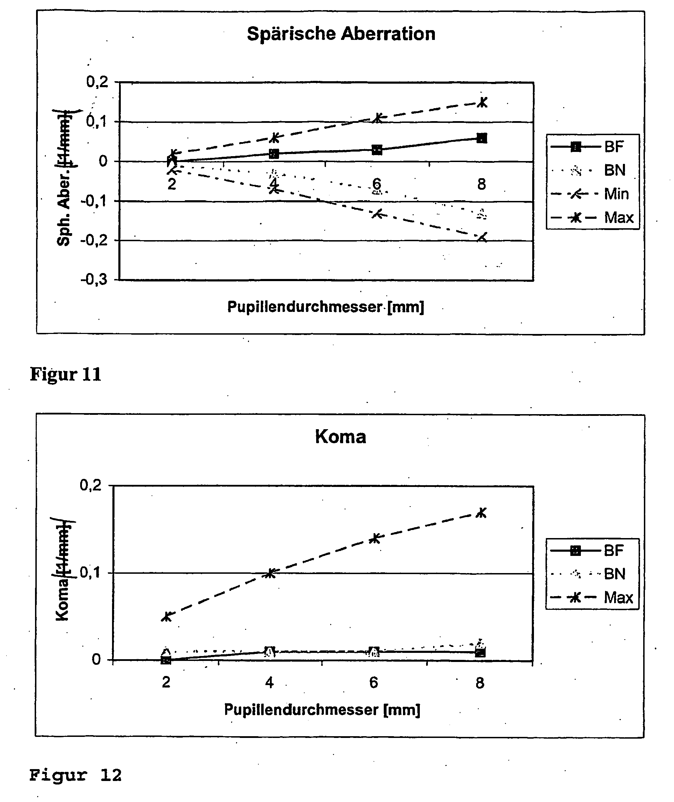

In Fig. 12 ist die Veränderung der Koma als Funktion des Pupillendurchmessers dargestellt. Die gestrichelte Linie mit Kreuzen stellt die Veränderung des Maximalwertes dar. Die durchgezogenen Linie mit Quadraten stellt die Veränderung im Fernbezugspunkt dar. Die punktierte Linie mit Dreiecken stellt die Veränderung im Nahbezugspunkt dar. Es ist zu erkennen, daß die Steigung (vom Betrag) in den Bezugspunkten viel geringer als im Maximalwert ist. Insbesondere ist die Koma in den Bezugspunkten sehr gering und steigt mit der Zunahme der Pupillenöffnung kaum an.

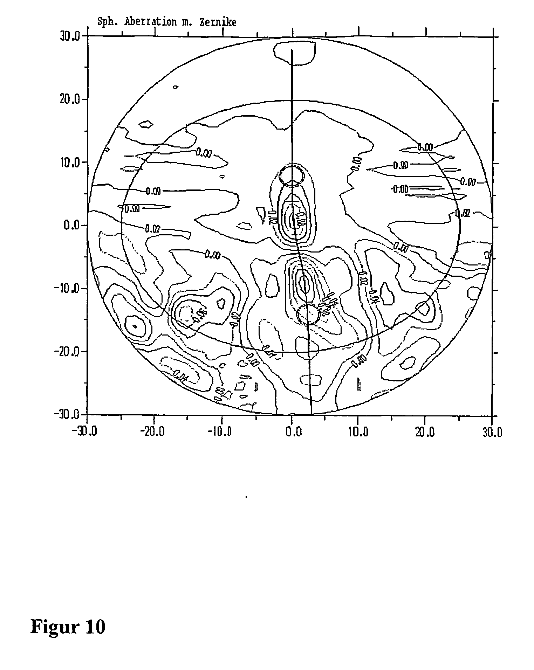

In Fig. 10 ist die sphärische Aberration dargestellt. Auch hier liegt wiederum das Ziel darin, nur soviel sphärische Aberration zuzulassen, wie vom Progressivglas selbst induziert wird. Dies bedeutet, daß sich sowohl der Maximalals auch der Minimalwert in der Progressionszone, also in dem oben beschriebenen Rechteck befindet. Weiter kann man in Fig. 10 erkennen, daß der Fernbereich praktisch keine sphärische Aberration aufweist. Entlang der Hauptblicklinie hat man zuerst (zu Beginn der Progressionszone) aufgrund der Zunahme des Brechwertes eine positive sphärische Aberration und dann eine negative Aberration zum Ende der Progressionszone.

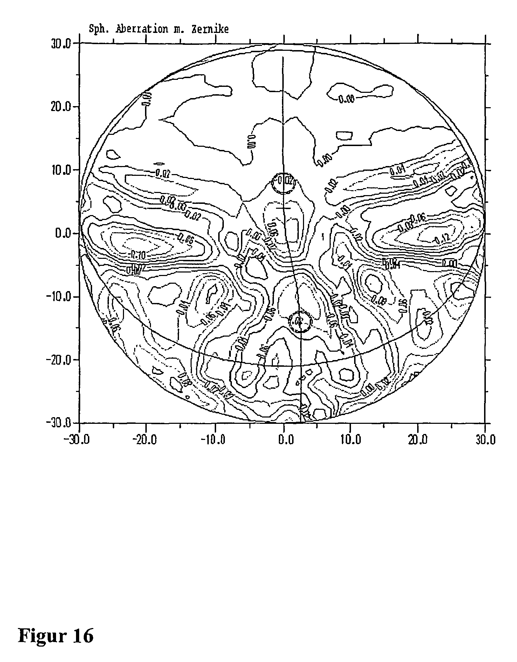

Beim Stand der Technik in Fig. 16 befindet sich sowohl der maximale Wert als auch der minimale Wert außerhalb dieses Rechtecks, nämlich die minimale Werte nasal und temporal bei Y = 0 und die maximalen Werte bei Y = -8. Diese Werte sind auch deutlich größer als bei der Erfindung.

Da auch die sphärische Aberration bei der Erfindung nur durch die Progression erzeugt wird, ist es sinnvoll, daß der Quotient aus sphärischer Aberration und Addition begrenzt ist.

| Addition | 1 | 2 | 3 |
|---|---|---|---|
| Minimale sphärische Aberration | -0,05 | -0,13 | -0,16 |
| Maximale sphärische Aberration | 0, 06 | 0,11 | 0,12 |

Die sphärische Aberration nimmt auch mit der Zunahme des Pupillendurchmessers zu. Jedoch ist es, insbesondere bei Progressivgläseren mit kurzer Progression bevorzugt, wenn dies begrenzt ist.

In Fig. 11 ist die Veränderung der sphärischen Aberration als Funktion des Pupillendurchmessers dargestellt. Die gestrichelte Linie mit Kreuzen stellt die Veränderung des Maximalwertes dar. Die strich-punktierte Linie mit Kreuzen stellt die Veränderung des Minimalwertes dar. Die durchgezogenen Linie mit Quadraten stellt die Veränderung im Fernbezugspunkt dar und die punktierte Linie mit Dreiecken stellt die Veränderung im Nahbezugspunkt dar. Es ist zu erkennen, daß die Steigung (vom Betrag) in den Bezugspunkten geringer ist als in den Maximalwerten.

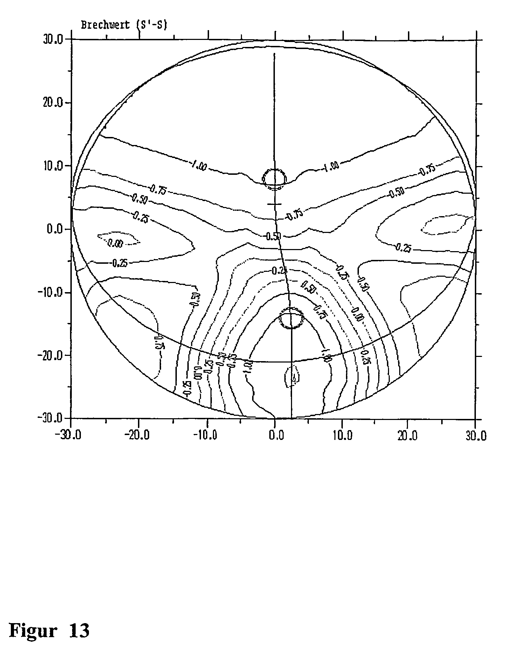

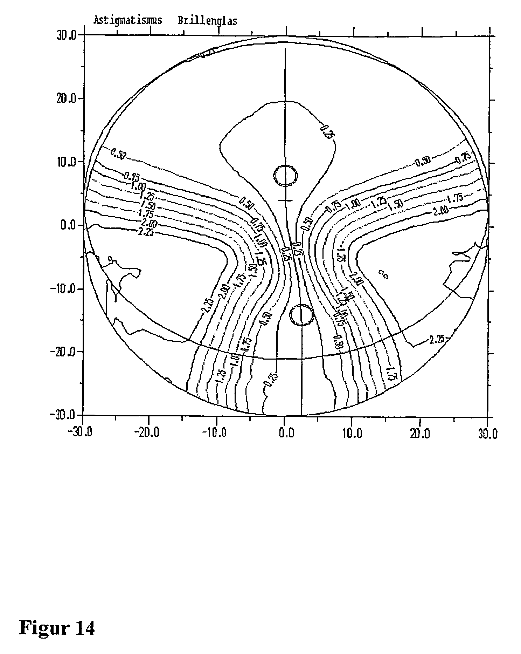

Bei den Fig. 13 und 14 sind der Brechwert und der Astigmatismus (jeweils in Gebrauchsstellung) eines Progressivglases nach dem Stand der Technik dargestellt. Das Brillenglas weist die Werte sph -1,0 Add 2,0 n = 1,596. Dabei handelt es sich um Progressiv life 2 von Rodenstock.

In den Fig. 15 und 16 sind die Koma und die sphärische Aberration dieses Progressivglases dargestellt.

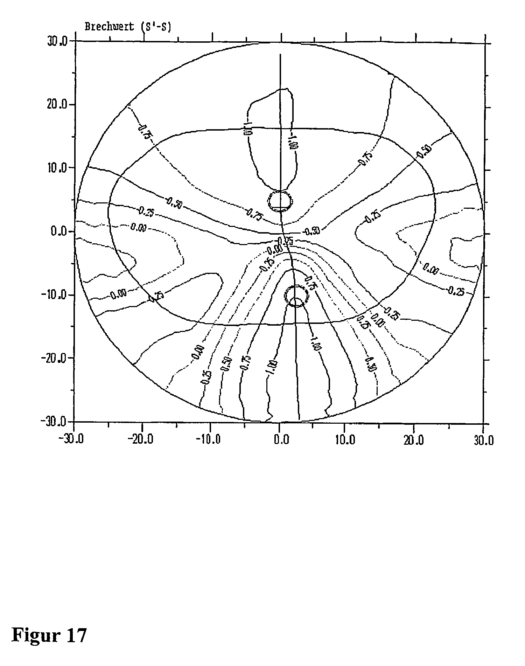

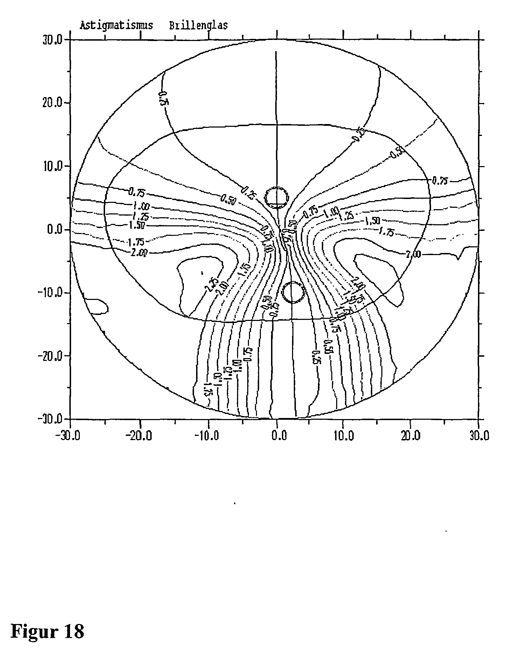

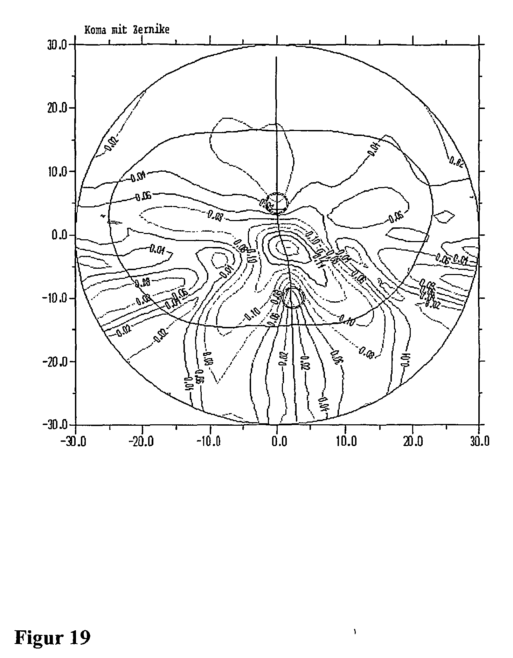

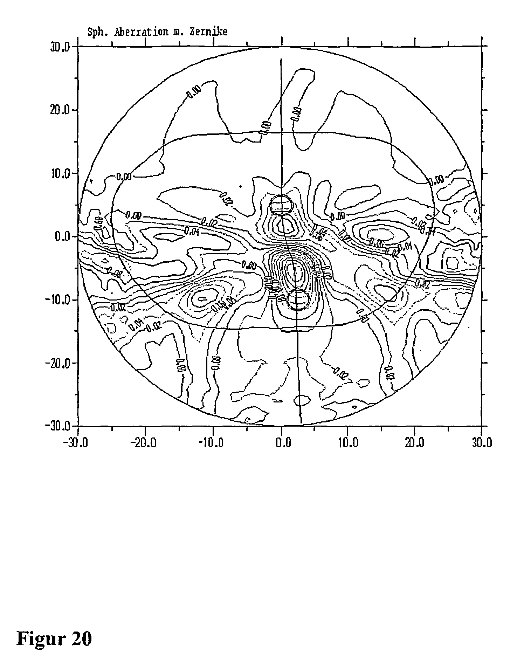

In den Fig. 17 bis 20 ist eine weiteres Ausführungsbeispiel nach der Erfindung dargestellt. Auch dieses Brillenglas weist die Werte sph -1,0 Add 2,0 n = 1,596 auf, aber hierbei ist nun die Progressionslänge deutlich kürzer. Dadurch steigt natürlich der maximale Wert der Koma und der Maximal- und Minimalwert der sphärischen Aberration. Dennoch ist auch hier sichergestellt, daß die Extremwerte im Progressisonskanal und somit im oben beschriebenen Rechteck liegen. Somit wird also auch hier kein zusätzlicher Fehler eingeführt.

## Patentansprüche

1. Verfahren zur Herstellung eines progressiven Brillenglases, umfassend die Schritte:
- Vorgeben eines Fernbezugspunktes, eines Nahbezugspunktes und eines Zentrierpunktes,
- Bestimmen einer ersten horizontalen Geraden, die durch den Zentrierpunkt geht,
- Bestimmen einer zweiten horizontalen Geraden, die durch den Nahbezugspunkt geht,
- Bestimmen einer ersten vertikalen Geraden, die durch den Zentrierpunkt und den Fernbezugspunkt geht,
- Bestimmen einer zweiten vertikalen Geraden, die durch den Nahbezugspunkt geht, und
- Berechnen des progressiven Brillenglases, so daß der Maximalwert der Koma in einem Rechteck liegt, das durch die erste und zweite horizontale Gerade und durch die erste und zweite vertikale Gerade begrenzt ist.

2. Verfahren zur Herstellung eines progressiven Brillenglas nach Anspruch 1, wobei der Schritt Berechnen des progressiven Brillenglases so ausgeführt wird, daß die Steigung des Verlaufs der Koma im Nah- und Fernbezugspunkt als Funktion des Pupillendurchmessers geringer ist als die Steigung des Verlaufs der maximalen Koma als Funktion des Pupillendurchmessers.

3. Verfahren zur Herstellung eines progressives Brillenglases, umfassend die Schritte:
- Vorgeben eines Fernbezugspunktes, eines Nahbezugspunktes und eines Zentrierpunktes,
- Bestimmen einer ersten horizontalen Geraden, die durch den Zentrierpunkt geht,
- Bestimmen einer zweiten horizontalen Geraden, die durch den Nahbezugspunkt geht,
- Bestimmen einer ersten vertikalen Geraden, die durch den Zentrierpunkt und den Fernbezugspunkt geht,
- Bestimmen einer zweiten vertikalen Geraden, die durch den Nahbezugspunkt geht, und
- Berechnen des progressiven Brillenglases, so daß der Maximalwert und der Minimalwert der sphärischen Aberration beide in einem Rechteck liegen, das durch die erste und zweite horizontale Gerade und die erste und zweite vertikale Gerade begrenzt ist.

4. Verfahren zur Herstellung eines progressives Brillenglas nach einem der Ansprüche 1 bis 3, wobei der Schritt des Berechnens des Brillenglases so ausgeführt wird, daß die Abhängigkeit der sphärischen Aberration als Funktion des Pupillendurchmessers im Fernbezugspunkt und die Abhängigkeit der sphärischen Aberration als Funktion des Pupillendurchmessers im Nahbezugspunkt jeweils eine Steigung aufweist, deren Betrag geringer ist, als
- der Betrag der Steigung des Verlaufs der maximalen sphärischen Aberration als Funktion des Pupillendurchmessers, und
- der Betrag der Steigung des Verlaufs der minimalen sphärischen Aberration als Funktion des Pupillendurchmessers.

5. Verfahren zur Herstellung eines progressiven Brillenglases nach einem oder mehreren der Ansprüche 1 bis 4, mit folgenden weiteren Schritten:
- Vorgeben einer Blickrichtung oder eines Objektpunktes oder eines Punktes auf einer Vorderfläche oder eines Punktes auf einer Rückfläche des Brillenglases,
- Vorgeben der Position des Augendrehpunktes,
- Berechnen des Strahlengangs mittels Strahldurchrechnung,
- Berechnen der Lage der Aperturblende durch Rotieren der Eintrittspupille des Auges je nach Blickrichtung um den Augendrehpunkt, so daß die Mitte der Aperturblende auf dem Hauptstrahl liegt,
- Berechnen des Öffnungsstrahlengangs, wobei von einem gegebenen, auf dem Hauptstrahl liegenden Objektpunkt Strahlen mit unterschiedlichen Öffnungswinkeln berechnet werden,
- Berechnen der Wellenfront in der Eintrittspupille aus diesen Strahlen und den optischen Weglängen,
- Darstellen der Wellenfront mittels Zernikefunktionen,
- Berechnen der Abbildungsfehler aus den Koeffizienten der Zernikefunktion.

6. Verfahren zur Herstellung eines Brillenglaseswnach Anspruch 5, wobei im Schritt Berechnen der Abbildungsfehler folgende Abbildungsfehler aus den Koeffizienten der Zernikefunktion berechnet werden:
- die Abweichung des Brechwertes von einem Soll-Brechwert,
- die Abweichung des Astigmatismus von einem Soll-Astigmatismus,
- die sphärische Aberration und
- die Koma.

## Claims

1. Process for the production of a progressive spectacle lens comprising the steps:
• presetting a far reference point, a near reference point and a centring point,
• determining a first horizontal straight line that passes through the centring point,
• determining a second horizontal straight line that passes through the near reference point,
• determining a first vertical straight line that passes through the centring point and the far reference point,
• determining a second vertical straight line that passes through the near reference point, and
• calculating the progressive spectacle lens, so that the maximum value of the coma lies in a rectangle, which is delimited by the first and second horizontal straight line and by the first and second vertical straight line.

2. Process for the production of a progressive spectacle lens according to claim 1, wherein the step of calculating the progressive spectacle lens is performed so that the gradient of the course of the coma in the near and far reference point as a function of the pupil diameter is smaller than the gradient of the course of the maximum coma as a function of the pupil diameter.

3. Process for the production of a progressive spectacle lens, comprising the steps:
• presetting a far reference point, a near reference point and a centring point,
• determining a first horizontal straight line that passes through the centring point,
• determining a second horizontal straight line that passes through the near reference point,
• determining a first vertical straight line that passes through the centring point and the far reference point,
• determining a second vertical straight line that passes through the near reference point, and
• calculating the progressive spectacle lens, so that the maximum value and the minimum value of the spherical aberration both lie in a rectangle, which is delimited by the first and second horizontal straight line and by the first and second vertical straight line.

4. Process for the production of a progressive spectacle lens according to one of claims 1 to 3, wherein the step of calculating the spectacle lens is performed so that the dependence of the spherical aberration as a function of the pupil diameter in the far reference point and the dependence of the spherical aberration as a function of the pupil diameter in the near reference point respectively have a gradient that is smaller in amount than
• the amount of the gradient of the course of the maximum spherical aberration as a function of the pupil diameter, and
• the amount of the gradient of the course of the minimum spherical aberration as a function of the pupil diameter.

5. Process for the production of a progressive spectacle lens according to one or more of claims 1 to 4, with the following further steps:
• presetting a viewing direction or an object point or a point on a front surface or a point on a rear surface of the spectacle lens,
• presetting the position of the centre of rotation of the eye,
• calculating the optical path by means of ray tracing,
• calculating the position of the aperture stop by rotating the entrance pupil of the eye according to the viewing direction around the centre of rotation of the eye, so that the centre of the aperture stop lies on the principal ray,
• calculating the aperture optical path, wherein rays with different aperture angles are calculated from a given object point lying on the principal ray,
• calculating the wave front in the entrance pupil from these rays and the optical path lengths,
• presenting the wave front by means of Zernike functions,
• calculating the aberrations from the coefficients of the Zemike function.

6. Process for the production of a spectacle lens according to claim 5, wherein in the step of calculating the aberrations the following aberrations are calculated from the coefficients of the Zemike function:
• the deviation of the optical power from a desired optical power,
• the deviation of the astigmatism from a desired astigmatism,
• the spherical aberration and
• the coma.

## Revendications

1. Procédé de fabrication d'un verre de lunettes progressif, comprenant les étapes consistant à :
- spécifier un point de référence pour la vision de loin, un point de référence pour la vision de près et un point de centrage ;
- déterminer une première droite horizontale passant par le point de centrage ;
- déterminer une deuxième droite horizontale passant par le point de référence pour la vision de près ;
- déterminer d'une première droite verticale passant par le point de centrage et le point de référence pour la vision de loin ;
- déterminer une deuxième droite verticale passant par le point de référence pour la vision de près ; et
- calculer le verre de lunettes progressif de sorte que la valeur maximale du coma se situe dans un rectangle limité par la première et la deuxième droite horizontale et par la première et la deuxième droite verticale.

2. Procédé de fabrication d'un verre de lunettes progressif selon la revendication 1, dans lequel l'étape du calcul du verre de lunettes progressif est exécutée de telle sorte que la pente de la courbe du coma au point de référence pour la vision de près et au point de référence pour la vision de loin fonction du diamètre de pupille est inférieure à la pente de la courbe du coma maximal fonction du diamètre de pupille.

3. Procédé de fabrication d'un verre de lunettes progressif, comprenant les étapes consistant à :
- spécifier un point de référence pour la vision de loin, un point de référence pour la vision de près et un point de centrage ;
- déterminer une première droite horizontale passant par le point de centrage ;
- déterminer une deuxième droite horizontale passant par le point de référence pour la vision de près ;
- déterminer d'une première droite verticale passant par le point de centrage et le point de référence pour la vision de loin ;
- déterminer une deuxième droite verticale passant par le point de référence pour la vision de près ; et
- calculer le verre de lunettes progressif de sorte que la valeur maximale et la valeur minimale de l'aberration sphérique des deux se situent dans un rectangle limité par la première et la deuxième droite horizontale et par la première et la deuxième droite verticale.

4. Procédé de fabrication d'un verre de lunettes progressif selon l'une quelconque des revendications 1 à 3, dans lequel l'étape du calcul du verre de lunettes est exécutée de telle sorte que la dépendance de l'aberration sphérique fonction du diamètre de pupille au point de référence pour la vision de loin et la dépendance de l'aberration sphérique fonction du diamètre de pupille au point de référence pour la vision de près présentent respectivement une pente dont la grandeur est inférieure à
- la grandeur de la pente de la courbe de l'aberration sphérique maximale fonction du diamètre de pupille ; et
- la grandeur de la pente de la courbe de l'aberration sphérique minimale fonction du diamètre de pupille.

5. Procédé de fabrication d'un verre de lunettes progressif selon une ou plusieurs des revendications 1 à 4, comprenant les étapes supplémentaires suivantes consistant à :
- spécifier une direction de visée ou un point objet ou un point sur une face avant ou un point sur une face arrière du verre de lunettes ;
- spécifier la position du centre de rotation de l'oeil ;
- calculer la trajectoire des rayons au moyen d'un calcul complet des rayons ;
- calculer la position du diaphragme par rotation de la pupille d'entrée de l'oeil en fonction de la direction de visée autour du centre de rotation de l'oeil de sorte que le centre du diaphragme se situe sur le rayon principal ;
- calculer la trajectoire des rayons d'ouverture, des rayons avec différents angles d'ouverture étant calculés à partir d'un point objet donné, situé sur le rayon principal ;
- calculer le front d'onde dans la pupille d'entrée à partir de ces rayons et des chemins optiques ;
- représenter le front d'onde au moyen de polynômes de Zernike ;
- calculer les erreurs d'aberration à partir des coefficients du polynôme de Zernike.

6. Procédé de fabrication d'un verre de lunettes selon la revendication 5, dans lequel à l'étape du calcul des erreurs d'aberration, les erreurs d'aberration suivantes sont calculées à partir des coefficients du polynôme de Zernike :
- l'écart de l'indice de réfraction par rapport à un indice de réfraction théorique,
- l'écart de l'astigmatisme par rapport à un astigmatisme théorique,
- l'aberration sphérique, et
- le coma.
